# FASCICULE DE BREVET EUROPEEN

(11) **EP 3 810 437 B1**
(45) Date de publication et mention de la délivrance du brevet: **03.08.2022**
(21) Numéro de dépôt: 19737861.5
(22) Date de dépôt: 13.06.2019
(51) Int. Cl.: B60C 1/00, C08K 3/04, C08K 3/36, C08L 9/00, C08L 15/00

(54) **COMPOSITION COMPRENANT UN ÉLASTOMÈRE BUTADIÉNIQUE ET UNE CHARGE SPÉCIFIQUE, ET PNEUMATIQUE COMPRENANT CETTE COMPOSITION**
ZUSAMMENSETZUNG MIT EINEM BUTADIENELASTOMER UND EINEM SPEZIFIZIERTEN FÜLLSTOFF UND REIFEN MIT DIESER ZUSAMMENSETZUNG
COMPOSITION COMPRISING A BUTADIENE ELASTOMER AND A SPECIFIC FILLER, AND TYRE COMPRISING THIS COMPOSITION

(30) Priorité: 19.06.2018 FR 1855361
(43) Date de publication de la demande: 28.04.2021
(73) Titulaire: COMPAGNIE GENERALE DES ETABLISSEMENTS MICHELIN, 63000 Clermont-Ferrand (FR)
(72) Inventeur: EL-OTHMANI, Karim, 63040 CLERMONT-FERRAND CEDEX 9 (FR); MARECHAL, Jean-Marc, 63040 CLERMONT-FERRAND CEDEX 9 (FR)
(74) Mandataire: Louret, Sylvain
(86) Numéro de dépôt international: PCT/FR2019/051428
(87) Numéro de publication internationale: WO 2019/243713

(56) Documents cités:
- EP-A1- 2 184 317
- WO-A1-2014/184158
- WO-A1-2018/078306

## Description

### Domaine technique de l'invention

L'invention concerne une composition de caoutchouc et un pneumatique adapté pour le roulage à plat.

### Art antérieur

Depuis quelques années, les manufacturiers de pneumatiques cherchent à supprimer la nécessité de la présence d'une roue de secours à bord du véhicule tout en garantissant la possibilité au véhicule de poursuivre sa route malgré une perte importante ou totale de pression d'un ou plusieurs pneumatiques. Cela permet par exemple de se rendre à un point de dépannage sans devoir s'arrêter, dans des circonstances souvent hasardeuses, pour installer la roue de secours.

Lorsque la pression de gonflage est significativement abaissée par rapport à la pression de service, voire même nulle (on parle alors de mode « roulage à plat »), le pneumatique doit permettre de rouler une distance donnée à une vitesse donnée, par exemple 80 km à 80 km/h. Cette performance, dite performance « RME » (Roulage Mode Etendu), est requise par la législation ou par les constructeurs automobiles pour permettre au manufacturier de présenter le pneumatique comme adapté pour le roulage à plat.

Lorsque la pression de gonflage est proche de la pression de service (on parle alors de mode « roulage normal »), il est souhaitable que le pneumatique présente des performances, dites performances « RMG » (Roulage Mode Gonflé), aussi élevées que possible. Ces performances RMG comprennent, entre autres, la masse, la résistance au roulement ou encore le confort.

Une solution envisagée est l'utilisation de pneumatiques adaptés pour un roulage à plat et pourvus de flancs autoporteurs, parfois désignés par les appellations commerciales en langue anglaise « ZP » pour « zero pressure », « SST » pour « self supporting tire » ou « run flat » pour roulage à plat.

On connait de l'état de la technique un pneumatique adapté pour un roulage à plat comportant un sommet comprenant une armature de sommet, formée de deux nappes de sommet d'éléments de renfort et surmontée d'une bande de roulement. Deux flancs prolongent le sommet radialement vers l'intérieur. Le pneumatique comporte en outre deux bourrelets comprenant chacun une tringle ainsi qu'une armature de carcasse ancrée à chacun des bourrelets et s'étendant depuis les bourrelets à travers les flancs vers le sommet. Les flancs sont renforcés au moyen de renforts de flancs en caoutchouc permettant de supporter une charge à pression réduite, voire sans pression. Chaque renfort de flanc en caoutchouc est fabriqué à partir d'une composition de caoutchouc réticulable et doit présenter certaines propriétés à cuit, notamment une rigidité suffisante, pour supporter au moins partiellement la charge à pression réduite, voire sans pression.

On souhaite que les compositions de caoutchouc mises en œuvre pour la fabrication des renforts de flancs présentent la meilleure processabilité possible, c'est-à-dire qu'elles puissent être stockées, soient faciles à mettre en forme et conservent cette forme jusqu'à leur incorporation dans le pneumatique afin, en particulier, que l'architecture de ce dernier soit respectée. La processabilité de la composition de caoutchouc est liée à certaines propriétés à cru, notamment sa plasticité à laquelle est liée la propriété de fluage de la composition. Or ces propriétés sont souvent difficiles à concilier avec l'obtention de performances à cuit comme l'endurance ou la réduction de la résistance au roulement des pneumatiques dans lesquels elles sont incorporées.

On connait du document FR 3 005 471 une composition comprenant comme élastomère majoritaire un polybutadiène présentant une plasticité Mooney comprise dans un domaine de valeurs allant de 40 à 70 unités Mooney et une charge renforçante spécifique, à savoir un noir de carbone présentant une surface spécifique comprise entre 15 et 25m²/g et un indice d'absorption d'huile par des échantillons comprimés (COAN) compris entre 65 et 85 ml/100g, cette composition présentant une excellente processabilité. Cette composition est utilisée dans les inserts de flancs d'un pneumatique adapté pour un roulage à plat et améliore leur résistance à l'échauffement.

On connait également du document WO 2014/105811 un pneumatique adapté pour le roulage à plat comprenant des inserts de flancs dont la composition est à base de polybutadiène fonctionnel et d'un coupage d'un noir de carbone présentant une surface spécifique comprise entre 15 et 25 m²/g et un COAN compris entre 65 et 85 ml/100g et d'un noir de carbone de surface spécifique comprise entre 0 et 11 m²/g, ces flancs présentant une forte rigidité et une faible perte hystérétique.

La demanderesse a découvert une composition qui présente une processabilité élevée et permet d'obtenir des inserts de flancs pour un pneumatique adapté pour un roulage à plat ayant une rigidité suffisante pour assurer la performance RME tout en abaissant encore la résistance au roulement du pneumatique comprenant ce renfort, grâce à la combinaison de matériaux utilisés dans la composition de caoutchouc selon l'invention.

### Description détaillée de l'invention

L'invention, décrite plus en détails ci-après, a pour objet au moins l'une des réalisations énumérées aux points suivants :
1. Composition de caoutchouc à base :
   - d'une matrice élastomérique comprenant au moins 50 pce d'élastomère butadiénique ;
   - d'un système de réticulation ;
   - d'au plus 60 pce de charge comprenant :
   - de 5 à 30 pce de noir de carbone comprenant majoritairement un noir de carbone, dit noir G, présentant une surface spécifique BET au plus égale à 40 m²/g et un indice d'absorption d'huile d'échantillons comprimés (COAN) au moins égal à 60 ml/100 g;
   - de 2 à 30 pce de charge inorganique
      ladite composition ne comprenant pas d'agent de couplage, ou en comprenant moins de 5 % en masse par rapport à la masse de charge inorganique.
2. Composition selon la réalisation précédente dans laquelle l'élastomère butadiénique est choisi dans le groupe constitué par les polybutadiènes, les copolymères de butadiène et leurs mélanges.
3. Composition selon la réalisation précédente dans laquelle les copolymères de butadiène sont choisis dans le groupe constitué par les copolymères de butadiène-styrène et leurs mélanges.
4. Composition selon l'une des réalisations 1 ou 2 dans laquelle l'élastomère butadiénique est choisi dans le groupe constitué par les polybutadiènes et leurs mélanges.
5. Composition selon l'une quelconque des réalisations précédentes dans laquelle la matrice élastomérique comprend également un élastomère isoprénique, de préférence choisi dans le groupe constitué par les polyisoprènes de synthèse, le caoutchouc naturel, les copolymères d'isoprène et les mélanges de ces élastomères.
6. Composition selon l'une quelconque des réalisations précédentes dans laquelle l'élastomère butadiénique est fonctionnalisé.
7. Composition selon la réalisation précédente dans laquelle l'élastomère butadiénique fonctionnalisé comprend un groupe fonctionnel comprenant une fonction choisie dans le groupe constitué par les fonctions alcoxysilane, silanol, amine, acide carboxylique, polyéther et leurs combinaisons, préférentiellement constitué par les fonctions alcoxysilane, silanol, amine et leurs combinaisons.
8. Composition selon la réalisation précédente dans laquelle l'élastomère butadiénique fonctionnalisé comprend un groupe fonctionnel comprenant au moins une fonction amine.
9. Composition selon l'une quelconque des réalisations 6 à 8 dans laquelle l'élastomère butadiénique fonctionnalisé est couplé et/ou étoilé.
10. Composition selon l'une quelconque des réalisations précédentes comprenant de 50 à 80 pce, préférentiellement de 50 à 70 pce, d'élastomère butadiénique et de préférence de 20 à 50 pce, préférentiellement de 30 à 50 pce, d'élastomère isoprénique.
11. Composition selon l'une quelconque des réalisations précédentes dans laquelle le noir G présente un indice COAN au moins égal à 65 ml/100 g, de manière préférée au moins égal à 70 ml/100 g.
12. Composition selon l'une quelconque des réalisations précédentes dans laquelle le noir G présente un indice COAN au plus égal à 90 ml/100 g.
13. Composition selon l'une quelconque des réalisations précédentes dans laquelle le noir G présente une surface spécifique BET au plus égale à 30m²/g, préférentiellement au plus égale à 25 m²/g.
14. Composition selon l'une quelconque des réalisations précédentes dans laquelle le noir G présente une surface spécifique BET au moins égale à 15 m²/g.
15. Composition selon l'une quelconque des réalisations précédentes dans laquelle le taux de noir G est compris dans un domaine de valeurs allant de 5 à 30 pce, de préférence de 10 à 30 pce.
16. Composition selon l'une quelconque des réalisations précédentes ne comprenant pas de noir de carbone dont la surface BET est inférieure à 15 m²/g ou en comprenant moins de 10 pce, de préférence moins de 5 pce, de manière préférée moins de 2 pce, préférentiellement moins de 1 pce.
17. Composition selon l'une quelconque des réalisations précédentes dans laquelle la charge inorganique est choisie dans le groupe constitué par la silice, l'alumine, la craie, l'argile, la bentonite, le talc, le kaolin, les microbilles de verre, les paillettes de verre, et leurs mélanges, de préférence constitué par la silice, la craie, l'argile, la bentonite, le talc, le kaolin, et leurs mélanges.
18. Composition selon l'une quelconque des réalisations précédentes comprenant de 3 à 30 pce, de manière préférée de 3 à 20 pce et de manière très préférée de 3 à 15 pce de charge inorganique.
19. Composition selon l'une quelconque des réalisations précédentes dans laquelle la charge inorganique comprend de 3 à 15 pce de silice.
20. Composition selon l'une quelconque des réalisations précédentes ne comprenant pas d'agent de couplage, ou en comprenant moins de 2 % en masse, de manière préférée moins de 1% en masse par rapport à la masse de charge inorganique.
21. Composition selon l'une quelconque des réalisations précédentes comprenant au plus 50 pce de charge, préférentiellement au plus 40 pce de charge, et de manière préférée au plus 35 pce de charge.
22. Article de caoutchouc fini ou semi-fini comportant une composition selon l'une quelconque des réalisations 1 à 21.
23. Pneumatique comprenant une composition selon l'une quelconque des réalisations 1 à 21.
24. Pneumatique selon la réalisation précédente dans lequel la composition de caoutchouc selon l'une quelconque des réalisations 1 à 21 est présente dans au moins une couche interne.
25. Pneumatique selon la réalisation précédente dans lequel la composition de caoutchouc selon l'une quelconque des réalisations 1 à 21 est présente dans une couche interne choisie dans le groupe constitué par les pieds sommets, les couches de découplage, les gommes de bordure, les gommes de bourrage, la sous-couche de bande de roulement, le renfort de flanc et les combinaisons de ces couches internes.
26. Pneumatique adapté pour un roulage à plat caractérisé en ce qu'il comprend un renfort de flanc comprenant une composition selon l'une quelconque des réalisations 1 à 21.

### Définitions

Par l'expression "partie en poids pour cent parties en poids d'élastomère" (ou pce), il faut entendre au sens de la présente invention, la partie, en masse pour cent parties en masse d'élastomère ou de caoutchouc, les deux termes étant synonymes.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères. De préférence par majoritaire, on entend présent à plus de 50%, de préférence plus de 60%, 70%, 80%, 90%, et plus préférentiellement le composé « majoritaire » représente 100%.

Par « matrice élastomérique » au sens de la présente invention, on entend l'ensemble des élastomères (ou caoutchoucs) de la composition de caoutchouc. Ainsi, la matrice élastomérique peut notamment être constituée d'un seul élastomère mais aussi d'un coupage de deux ou de plusieurs élastomères.

Par l'expression "composition à base de", il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Elastomères

La composition de caoutchouc selon l'invention est à base d'au moins 50 pce d'élastomère butadiénique. Ainsi, la composition selon l'invention peut contenir un ou plusieurs élastomères butadiéniques ou un mélange d'un ou plusieurs élastomères butadiéniques avec un ou plusieurs autres élastomères, par exemple diéniques autres que butadiéniques.

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

On entend particulièrement par élastomère diénique susceptible d'être utilisé dans les compositions conformes à l'invention :
(a) tout homopolymère d'un monomère diène, conjugué ou non, ayant de 4 à 18 atomes de carbone ;
(b)tout copolymère d'un diène, conjugué ou non, ayant de 4 à 18 atomes de carbone et d'au moins un autre monomère.

L'autre monomère peut être l'éthylène, une oléfine ou un diène, conjugué ou non.

A titre de diènes conjugués conviennent les diènes conjugués ayant de 4 à 12 atomes de carbone, en particulier les 1,3-diènes, tels que notamment le 1,3-butadiène et l'isoprène.

A titre de diènes non conjugués conviennent les diènes non conjugués ayant de 6 à 12 atomes de carbone, tels que le 1,4-hexadiène, l'éthylidène norbornène, le dicyclopentadiène.

A titre d'oléfines conviennent les composés vinylaromatiques ayant de 8 à 20 atomes de carbone et les α-monooléfines aliphatiques ayant de 3 à 12 atomes de carbone.

A titre de composés vinylaromatiques conviennent par exemple le styrène, l'ortho-, méta-, para-méthylstyrène, le mélange commercial "vinyle-toluène", le para-tertiobutylstyrène.

A titre d'α-monooléfines aliphatiques conviennent notamment les α-monooléfines aliphatiques acycliques ayant de 3 à 18 atomes de carbone.

Plus particulièrement, l'élastomère diénique est :
(a') tout homopolymère d'un monomère diène conjugué, notamment tout homopolymère obtenu par polymérisation d'un monomère diène conjugué ayant de 4 à 12 atomes de carbone;
(b') tout copolymère obtenu par copolymérisation d'un ou plusieurs diènes conjugués entre eux ou avec un ou plusieurs composés vinylaromatiques ayant de 8 à 20 atomes de carbone;
(c') tout copolymère obtenu par copolymérisation d'un ou plusieurs diènes, conjugués ou non, avec l'éthylène, une α-monooléfine ou leur mélange comme par exemple les élastomères obtenus à partir d'éthylène, de propylène avec un monomère diène non conjugué du type précité,

L'élastomère diénique est de préférence un élastomère diénique essentiellement insaturé, en particulier du type (a') ou (b') décrit ci-dessus.

L'élastomère butadiénique de la composition selon l'invention est préférentiellement choisi dans le groupe constitué par les polybutadiènes (en abrégé "BR"), les copolymères de butadiène et leurs mélanges. De tels copolymères de butadiène sont plus préférentiellement choisis dans le groupe constitué par les copolymères de butadiène-styrène (SBR) et leurs mélanges. De manière préférée, l'élastomère butadiénique est choisi dans le groupe constitué par les polybutadiènes et leurs mélanges.

La matrice élastomérique de la composition selon l'invention comprend également de manière préférée un élastomère isoprénique.

Par "élastomère isoprénique", on entend un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène, en particulier les copolymères d'isoprène-styrène (SIR), d'isoprène-butadiène (BIR) ou d'isoprène-butadiène-styrène (SBIR), et les mélanges de ces élastomères.

De manière préférée, l'élastomère isoprénique est choisi dans le groupe constitué par les polyisoprènes de synthèse, le caoutchouc naturel, les copolymères d'isoprène et leurs mélanges, de préférence dans le groupe constitué par le caoutchouc naturel, les polyisoprènes comprenant un taux massique de liaisons cis 1,4 d'au moins 90%, plus préférentiellement d'au moins 98% par rapport à la masse d'élastomère isoprénique et leurs mélanges. De manière préférée, l'élastomère isoprénique est le caoutchouc naturel.

De manière préférée, l'élastomère isoprénique et/ou butadiénique est fonctionnalisé, c'est à dire comprend au moins un groupe fonctionnel. Par groupe fonctionnel, on entend un groupe comprenant au moins un hétéroatome choisi parmi Si, N, S, O, P.

De préférence, l'élastomère butadiénique est fonctionnalisé. L'élastomère butadiénique fonctionnalisé comprend de manière préférée un groupe fonctionnel comprenant une fonction choisie dans le groupe constitué par les fonctions alcoxysilane, silanol, amine, acide carboxylique, polyéther et leurs combinaisons, de manière préférée comprenant une fonction choisie dans le groupe constitué par les fonctions alcoxysilane, silanol, amine et leurs combinaisons, et de manière très préférée un groupe comprenant au moins une fonction amine.

De manière préférée, l'élastomère butadiénique fonctionnalisé est couplé et/ou étoilé, par exemple au moyen d'un atome de silicium ou d'étain qui lie entre elles les chaînes élastomères.

De manière préférée, l'élastomère butadiénique fonctionnalisé est choisi dans le groupe constitué par les polybutadiènes fonctionnalisés et leurs mélanges. Dans un cas préféré où l'élastomère butadiénique fonctionnalisé est choisi dans le groupe des polybutadiènes fonctionnalisés, préférentiellement couplés et/ou étoilés, il présente préférentiellement un taux de motifs cis-1,4 d'au plus 50% et de préférence d'au plus 40% en poids du poids total du polybutadiène.

De tels élastomères butadiéniques fonctionnalisés utiles aux besoins de l'invention sont disponibles commercialement. On peut citer par exemple le NIPOL BR 1250H^{™}, commercialisé par la société Zeon Corporation.

De préférence, la composition selon l'invention comprend de 50 à 80 pce, préférentiellement de 50 à 70 pce, de manière préférée de 51 à 70 pce, et très préférentiellement de 55 à 70 pce d'élastomère butadiénique, préférentiellement fonctionnalisé. De préférence, la composition selon l'invention comprend de 20 à 50 pce, préférentiellement de 30 à 50 pce, de manière préférée de 30 à 49 pce, et très préférentiellement de 30 à 45 pce d'élastomère isoprénique.

L'élastomère isoprénique confère, entre autres, du collant à cru (« tack » en anglais) à la composition. Ainsi, on limite voire on supprime la nécessité d'utiliser une résine dite « tackifiante » dans la composition de caoutchouc qui pourrait augmenter l'hystérèse de la composition et donc impacter négativement la résistance au roulement du pneumatique selon l'invention.

De manière préférée, et selon l'un quelconque des arrangements selon l'invention, la composition selon l'invention comprend pour seuls élastomères ledit élastomère butadiénique, préférentiellement fonctionnalisé, et ledit élastomère isoprénique.

### Charges

La composition de caoutchouc selon l'invention est à base d'au plus 60 pce, préférentiellement d'au plus 50 pce, de manière préférée d'au plus 40 pce, et très préférée d'au plus 35 pce de charge comprenant :
- de 5 à 30 pce de noir de carbone comprenant majoritairement un noir de carbone, dit noir G, présentant une surface spécifique BET au plus égale à 40 m²/g et un indice d'absorption d'huile d'échantillons comprimés (COAN) au moins égal à 60 ml/100 g ;
- de 2 à 30 pce de charge inorganique.

### • Noir de carbone

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à un élastomère isoprénique sous la forme d'un masterbatch (voir par exemple demandes WO 97/36724 ou WO 99/16600).

On caractérise les noirs de carbone par différentes propriétés, notamment par la surface spécifique, et par l'indice d'absorption d'huile d'échantillons comprimés (COAN pour « Compressed Oil Absorption Number » en anglais). Le COAN des noirs de carbone, est mesuré selon la norme ASTM D3493-16.

La charge de la composition de caoutchouc selon l'invention comprend de 5 à 30 pce de noir de carbone, sous forme d'un seul noir de carbone ou d'un coupage d'au moins deux noirs de carbone. La charge de la composition de caoutchouc selon l'invention comprend majoritairement un noir de carbone, dit noir G, présentant une surface spécifique BET au plus égale à 40 m²/g et un indice d'absorption d'huile d'échantillons comprimés (COAN) au moins égal à 60 ml/100 g.

De préférence, le noir G présente un indice d'absorption d'huile COAN au moins égal à 65 ml/100g, de manière préférée au moins égal à 70 ml/100g. De préférence, le noir G présente un COAN au plus égal à 90 ml/100g, et de manière préférée au plus égal à 85 ml/100 g et de préférence compris dans un domaine de valeur allant de 70 ml/100 g à 80 ml/100 g.

La surface spécifique BET des noirs de carbone est mesurée selon la norme D6556-10 (méthode multipoints (au minimum 5 points) - gaz : azote - domaine de pression relative P/P0 : 0.1 à 0.3).

De préférence, la surface spécifique du noir G est au plus égale à 30m²/g, préférentiellement au plus égale à 25 m²/g. De manière préférée, la surface spécifique du noir G est au moins égal à 15 m²/g.

Un exemple d'un noir de carbone G utile aux besoins de l'invention est le N683, le N660 ou encore le « S204 » commercialisé par la société Orion Engineered Carbon.

Le taux de noir G dans la composition de caoutchouc selon l'invention est préférentiellement compris dans un domaine de valeurs allant de 5 à 30 pce, de préférence de 10 à 30 pce.

Le noir de carbone comprend majoritairement, c'est-à-dire au moins 50% en masse, de noir G. De manière préférée, le noir de carbone comporte 60%, 70%, 80%, 90% en masse de noir G. De manière très préférée, le noir de carbone est constitué de noir G.

La composition de caoutchouc selon l'invention ne comprend de préférence pas de noir de carbone dont la surface BET est inférieure à 15 m²/g ou en comprend moins de 10 pce, de préférence moins de 5 pce, de manière préférée moins de 2 pce, préférentiellement moins de 1 pce.

La composition de caoutchouc selon l'invention ne comprend de préférence pas de noir de carbone dont la surface BET est supérieure à 25 m²/g ou en comprend moins de 10 pce, de préférence moins de 5 pce, de manière préférée moins de 2 pce, préférentiellement moins de 1 pce.

### • Charges inorganiques

La composition de caoutchouc selon l'invention est également à base de 2 à 30 pce de charge inorganique.

L'état physique sous lequel se présente la charge inorganique est indifférent, que ce soit sous forme de poudre, de microperles, de granulés, de billes ou toute autre forme densifiée appropriée.

La charge inorganique est de manière préférée choisie parmi les charges minérales du type siliceuse, en particulier de la silice (SiO₂), ou du type alumineuse, en particulier de l'alumine (Al₂O₃), la craie, l'argile, la bentonite, le talc, le kaolin, les microbilles de verre, les paillettes de verre (« glass flakes » en anglais) et leur mélange, de manière préférée parmi la silice, la craie, l'argile, la bentonite, le talc, le kaolin et leur mélange, préférentiellement parmi la silice, la craie, le kaolin et leur mélange. De manière très préférée, la charge inorganique comprend de la silice.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La surface spécifique BET de la silice est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative p/po : 0.05 à 0.17).

La surface spécifique CTAB de la silice est déterminée selon la norme française NF T 45-007 de novembre 1987 (méthode B).

Dans le cas préféré où la charge inorganique comprend de la silice, celle-ci a de préférence une surface BET comprise entre 45 et 400 m²/g, plus préférentiellement comprise entre 60 et 300 m²/g.

La composition selon l'invention ne comprend pas d'agent de couplage charge inorganique-élastomère ou en comprend moins de 5 % en masse par rapport à la masse de charge inorganique. De préférence, la composition selon l'invention ne comprend pas d'agent de couplage charge inorganique-élastomère ou en comprend moins de 2 % en masse, de manière préférée moins de 1% en masse par rapport à la masse de charge inorganique.

Par « agent de couplage » (ou « agent de liaison »), on entend de manière connue un agent apte à coupler la charge inorganique à l'élastomère.

La craie se présente préférentiellement sous la forme de microparticules dont la taille moyenne (en masse) est supérieure à 1 µm. La taille médiane des microparticules de craie, mesure obtenue sur sédigraphe, est préférentiellement comprise entre 0,5 et 200 µm, plus particulièrement entre 0,5 et 30 µm et encore plus préférentiellement entre 1 et 20 µm.

Les craies connues de l'homme du métier sont les carbonates de calcium naturels (craie) ou synthétiques avec ou sans enrobage (par exemple avec de l'acide stéarique).

A titre d'exemples de telles craies préférentielles et disponibles commercialement, on peut citer par exemple la craie vendue sous la dénomination « Omya BLS » par la société Omya.

La composition de caoutchouc selon l'invention comprend préférentiellement de 3 à 30 pce de charge inorganique, de manière préférée de 3 à 20 pce et de manière très préférée de 3 à 15 pce, préférentiellement de 3 à 10 pce et très préférentiellement de 3 à 7 pce.

Ces teneurs en charge associées aux élastomères de la composition selon l'invention permettent à celle-ci de présenter une excellente processabilité, en particulier un faible fluage à froid, ainsi qu'un faible niveau de pertes hystérétiques.

### Système de réticulation

La composition de caoutchouc selon l'invention comprend un système de réticulation qui peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre. On parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 1 et 10 pce, de préférence entre 2 et 5 pce. L'accélérateur de vulcanisation est utilisé à un taux préférentiel compris dans un domaine allant de 1 à 7 pce, de préférence allant de 2 à 5 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### Additifs divers

La composition de caoutchouc selon l'invention peut également comprendre tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes telles que des bismaleimides, des accepteurs (par exemple résine phénolique novolaque) ou des donneurs de méthylène (par exemple HMT ou H3M).

De manière préférée, la composition de caoutchouc selon l'invention ne comprend pas de résine renforçante ou en comprend moins de 10 pce, de préférence moins de 5 pce, de manière préférée moins de 2 pce, préférentiellement moins de 1 pce et de manière très préférée moins de 0,2 pce.

Par résine renforçante, on entend une résine connue de l'homme du métier pour rigidifier des compositions de caoutchouc. Ainsi, une composition de caoutchouc dans laquelle une résine renforçante a été ajoutée présentera une rigidité, notamment un Module de Young (mesuré conformément à la norme ASTM 412-98a) ou un complexe de cisaillement dynamique G^{∗} (mesuré conformément à la norme ASTM D 5992-96), plus élevée que cette composition sans résine renforçante. De telles résines sont par exemple les résines phénoliques, les résines époxydes, les résines benzoxazines, les résines polyuréthanes, les résines aminoplastes, etc.

### Fabrication des compositions

La composition de caoutchouc selon l'invention est fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, les charges, les éventuels autres additifs divers, à l'exception du système de réticulation. L'incorporation de la charge à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation.

La phase non-productive est réalisée à haute température, jusqu'à une température maximale comprise entre 130°C et 170°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 110°C, par exemple entre 40°C et 100°C. On incorpore alors le système de réticulation, et le tout est alors mélangé pendant quelques minutes, par exemple entre 1 et 30 min.

La composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme couche interne dans un pneumatique.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation de la composition peut être conduite de manière connue de l'homme du métier, par exemple à une température comprise entre 130°C et 200°C, de préférence sous pression, pendant un temps suffisant qui peut varier par exemple entre 5 et 90 min.

### Articles de caoutchouc finis ou semi-finis

La présente invention a également pour objet un article de caoutchouc fini ou semi-fini, ainsi qu'un pneumatique comportant une composition selon l'invention. Sont concerné les articles et pneumatiques tant à l'état cru (c'est à dire, avant cuisson) qu'à l'état cuit (c'est à dire, après réticulation ou vulcanisation).

Il est possible de définir au sein du pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

La composition définie dans la présente description est particulièrement bien adaptée aux couches internes des pneumatiques.

### Pneumatique selon l'invention

L'invention concerne également un pneumatique comprenant une composition de caoutchouc selon l'invention. La présente invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd », - c'est-à-dire métro, bus, engins de transport routier (camions, tracteurs, remorques), véhicules hors-la-route tels qu'engins agricoles ou de génie civil -, et autres, et de manière préférée des pneumatiques destinés à équiper des véhicules de type « Poids-lourds ».

De manière préférée, l'invention concerne un pneumatique dans lequel la composition de caoutchouc selon l'invention est présente dans au moins une couche interne dudit pneumatique.

De manière avantageuse, ladite couche interne dudit pneumatique est choisie dans le groupe constitué par les pieds sommets, les couches de découplage, les gommes de bordure, les gommes de bourrage, la sous-couche de bande de roulement, le renfort de flanc et les combinaisons de ces couches internes. Dans la présente, on entend par « gomme de bordure », une couche positionné dans le pneumatique directement au contact de l'extrémité d'une nappe de renforcement, de l'extrémité d'un élément de renforcement ou d'une autre gomme de bordure.

L'invention concerne préférentiellement un pneumatique adapté pour un roulage à plat caractérisé en ce qu'il comprend un renfort de flanc comprenant une composition selon l'invention.

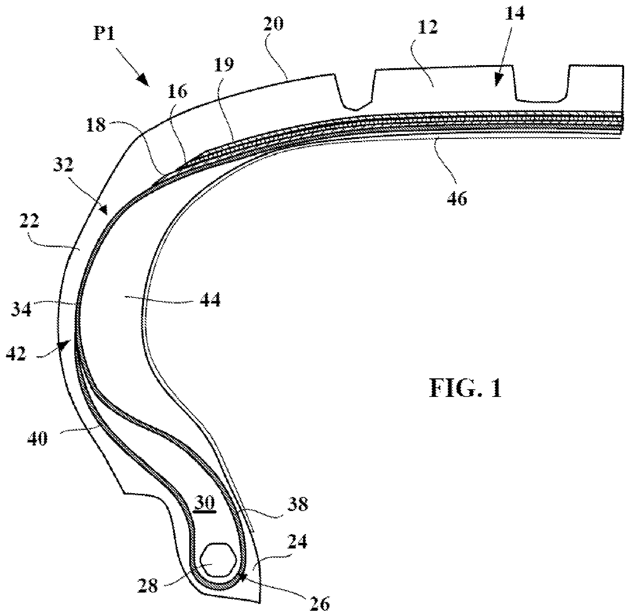

On a représenté schématiquement sur la **figure 1**, vue en coupe radiale, un pneumatique selon un mode de réalisation de l'invention désigné par la référence générale P1. Le pneumatique P1 est du type pour roulage à plat. Le pneumatique P1 est destiné à un véhicule de tourisme.

Ce pneumatique P1 comporte un sommet 12 comprenant une armature de sommet 14, formée de deux nappes de sommet d'éléments de renfort 16, 18 et d'une nappe de frettage 19. L'armature de sommet 14 est surmontée d'une bande de roulement 20. Ici, la nappe de frettage 19 est disposée radialement extérieure aux nappes 16, 18, entre les nappes 16, 18 et la bande de roulement 20. Deux flancs autoporteurs 22 prolongent le sommet 12 radialement vers l'intérieur.

Le pneumatique P1 comporte en outre deux bourrelets 24 radialement intérieurs aux flancs 22 et comportant chacun une structure annulaire de renfort 26, en l'occurrence une tringle 28, depuis laquelle s'étend radialement vers l'extérieur une masse de gomme 30 de bourrage sur tringle, ainsi qu'une armature de carcasse radiale 32.

L'armature de carcasse 32 s'étend depuis les bourrelets 24 à travers les flancs 22 vers le sommet 12. Elle comporte au moins une nappe de carcasse 34 comprenant, comme bien connu de l'Homme du métier, des éléments de renfort parallèles les uns aux autres s'étendant dans un plan sensiblement parallèle à la direction axiale du pneumatique P1 (armature de carcasse dite « radiale »). Sur la figure 1, la nappe 34 est ancrée à chacun des bourrelets 24 par un retournement autour de la tringle 28, de manière à former dans chaque bourrelet 24 un brin aller 38 s'étendant depuis les bourrelets à travers les flancs vers le sommet, et un brin retour 40, l'extrémité radialement extérieure 42 du brin retour 40 étant sensiblement à mi-hauteur du pneumatique.

Les compositions de caoutchouc utilisées pour les nappes de sommet 16, 18 et de carcasse 34 sont des compositions conventionnelles pour calandrage d'éléments de renfort, typiquement à base de caoutchouc naturel, de noir de carbone, d'un système de vulcanisation et des additifs usuels. Lorsque les éléments de renfort sont textiles, en particulier ici dans l'armature de carcasse, l'adhésion entre l'élément de renfort textile et la composition de caoutchouc qui l'enrobe est assurée par exemple par une colle usuelle du type RFL.

Le pneumatique P1 comporte encore deux inserts de flanc 44, axialement intérieurs à l'armature de carcasse 32. Ces inserts 44 avec leur section radiale caractéristique en forme de croissant sont destinés à renforcer le flanc. Chaque insert 44 est fabriqué à partir d'une composition de caoutchouc à base d'une composition de caoutchouc réticulable selon l'invention. Chaque insert de flanc 44 est susceptible de contribuer à supporter une charge correspondant à une partie du poids du véhicule lors d'une situation de roulage à plat.

Le pneumatique comprend également une couche interne 46 d'étanchéité, de préférence en butyl, située axialement intérieure aux flancs 22 et radialement intérieure à l'armature de sommet 14 et s'étendant entre les deux bourrelets 24. Les inserts de flanc 44 sont situés axialement extérieurs à la couche interne 46. Ainsi, les inserts de flanc 44 sont disposés axialement entre l'armature de carcasse 32 et la couche interne 46.

### Exemples

### Méthodes de mesure

La mesure de plasticité Mooney se fait selon le principe suivant et conformément à la norme ASTM D-1646. La composition ou l'élastomère, généralement cru, est moulé dans une enceinte cylindrique chauffée à une température donnée, usuellement 40°C. Après une minute de préchauffage, un rotor de type L tourne au sein de l'éprouvette à 0,02 tours par minute et on mesure le couple utile pour entretenir ce mouvement après 4 minutes de rotation. Cette vitesse de rotation, plus faible que la vitesse usuelle de 2 tr/min, permet d'obtenir des valeurs de plasticité représentatives de la tendance du matériau à fluer lors de son stockage ou après sa mise en forme. Plus cette valeur est faible, plus le matériau aura tendance à fluer.

La plasticité Mooney (ML 1+4) est exprimée en "unité Mooney" (UM, avec 1 UM = 0,83 Newton.mètre). On considère que le matériau peut être stocké, manipulé et mis en forme de manière satisfaisante lorsque la plasticité Mooney est comprise entre 50 et 100 UM.

Les propriétés dynamiques G^{∗}(10%) et tan(d)max à 40°C sont mesurées sur un viscoanalyseur (Metravib VA4000), selon la norme ASTM D 5992-96. On enregistre la réponse d'un échantillon de composition réticulée (éprouvette cylindrique de 4 mm d'épaisseur et de 400 mm² de section), soumis à une sollicitation sinusoïdale en cisaillement simple alterné, à la fréquence de 10Hz, dans les conditions définies de température par exemple à 40°C selon la norme ASTM D 1349-99, ou selon les cas à une température différente. On effectue un balayage en amplitude de déformation de 0,1 à 50% (cycle aller), puis de 50% à 1% (cycle retour). Les résultats exploités sont le module complexe de cisaillement dynamique G^{∗} et le facteur de perte tan(d). Pour le cycle retour, on indique la valeur maximale de tan(d) observée, noté tan(d)max, ainsi que le module complexe de cisaillement dynamique G^{∗}(10%) à 10% de déformation, à 40°C. Ces valeurs sont exprimées en base 100 en prenant pour référence la composition T1.

Ainsi, pour le module complexe de cisaillement dynamique, une valeur plus faible que 100 indique un module plus faible et donc une composition moins rigide.

On rappelle que, de manière bien connue de l'homme du métier, la valeur de tan(d)max à 40°C est représentative de l'hystérèse du matériau donc de la résistance au roulement : plus tan(d)max à 40°C est faible, plus la résistance au roulement est réduite et donc améliorée. Ainsi, une valeur plus faible que 100 indiquera une résistance au roulement réduite par rapport à la composition T1.

### Préparation des compositions

On procède pour les essais qui suivent de la manière suivante : on introduit dans un mélangeur interne (taux de remplissage final : environ 70% en volume), dont la température initiale de cuve est d'environ 60 °C, successivement, l'élastomère butadiénique, la charge renforçante ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore le système de vulcanisation, en mélangeant le tout (phase productive) pendant un temps approprié (par exemple entre 5 et 12 min).

Les compositions ainsi obtenues sont ensuite calandrées sous la forme de plaques (épaisseur de 2 à 3 mm) ou de feuilles fines de caoutchouc puis passent par une étape de cuisson à 150°C pendant 25 min avant la mesure de leurs propriétés physiques ou mécaniques « à cuit ».

### Exemple 1

Des essais ont été réalisés avec différentes compositions de caoutchouc présentées au tableau 1, à base d'un coupage de caoutchouc naturel et d'un élastomère constitué de polybutadiène non fonctionnel ou d'un coupage de caoutchouc naturel et d'un élastomère constitué de polybutadiène fonctionnel. La composition T1 correspond à la composition M2 du document FR 3 005 471.

On mesure pour chaque composition à cru, c'est-à-dire avant vulcanisation, la valeur de plasticité Mooney exprimée en UM (unité Mooney).

On mesure ensuite à cuit, donc après vulcanisation, le module de cisaillement dynamique et la valeur de tan(d)ₘₐₓ, exprimés en base 100 en prenant pour référence la composition T1.

**Tableau 1**

| | **T1** | **T2** | **I1** | **I2** | **I3** | **I4** | **I5** | **I6** | **I7** |
|---|---|---|---|---|---|---|---|---|---|
| NR (1) | 35 | 35 | 35 | 35 | 35 | 35 | 35 | 35 | 35 |
| BR non fonctionnel (2) | 65 | 65 | 65 | 65 | 65 | 65 | 0 | 0 | 0 |
| BR fonctionnel (3) | 0 | 0 | 0 | 0 | 0 | 0 | 65 | 65 | 65 |
| Noir S204 (4) | 50 | 30 | 30 | 30 | 30 | 30 | 30 | 30 | 30 |
| Silice 165G (5) | 0 | 0 | 0 | 5 | 10 | 0 | 0 | 5 | 0 |
| Craie | 0 | 0 | 30 | 0 | 0 | 0 | 20 | 0 | 0 |
| Kaolin | 0 | 0 | 0 | 0 | 0 | 20 | 0 | 0 | 20 |
| Additifs (6) | 9 | 9 | 9 | 9 | 9 | 9 | 9 | 9 | 9 |
| *Total charge (pce)* | *50* | 30 | *60* | *35* | *40* | *50* | *50* | *35* | *50* |
| Système de vulcanisation (7) | 6,2 | 6,2 | 6,2 | 6,2 | 6,2 | 6,2 | 6,2 | 6,2 | 6,2 |
| *Dont Soufre insoluble* | *3,3* | *3,3* | *3,3* | *3,3* | *3,3* | *3,3* | *3,3* | *3,3* | *3,3* |
| Plasticité Mooney 1+4 (UM) | 71 | 38 | 60 | 70 | 88 | 70 | 91 | 72 | 91 |
| G^{∗} (10%) à 40°C | 100 | 66 | 85 | 77 | 82 | 78 | 82 | 76 | 79 |
| tan(δ)ₘₐₓ à 40°C | 100 | 60 | 73 | 71 | 93 | 76 | 53 | 47 | 62 |

| | | | | | | | | | |
|---|---|---|---|---|---|---|---|---|---|
| (1) Caoutchouc naturel (2) Polybutadiène non fonctionnel « Buna CB24 » commercialisé par la société Lanxess, plasticité de 44 UM (3) Polybutadiène fonctionnel « Nipol BR 1250H » commercialisé par la société Zeon Corporation, plasticité de 50 UM (4) Noir de carbone S204 de la société Orion Engineered Carbon, S_{BET}=19 m²/g, COAN=76 ml/100 g. (5) Silice « 165G » commercialisée par Solvay (6) Les additifs comprennent de l'oxyde de zinc (grade industriel, société Umicore), de l'acide stéarique (« Pristerene 4931 » de la société Uniqema), du N-1,3-diméthylbutyl-N-phénylparaphénylènediamine (« Santoflex 6-PPD » de la société Flexsys) et du polymère 2,2,4-Trimethyl-1,2-Dihydroquinoline (TMQ) (7) Le système de vulcanisation comprend le soufre insoluble, l'accélérateur (N,N-dicyclohexylbenzothiazole-2-sulfénamide de la société Flexsys) et le retardateur (N-cyclohexylthiophtalimide commercialisé sous dénomination « Vulkalent G » par la société Lanxess) de vulcanisation | | | | | | | | | |

Les quantités sont exprimées en pce (parties en poids pour cent parties d'élastomères).

On observe que les compositions selon l'invention présentent une plasticité Mooney similaires voire supérieure à celle de la composition T1, témoignant d'un bon comportement en terme de fluage lors du stockage ou après mise en forme des compositions sous forme de semi-fini. On note que les compositions selon l'invention ont des pertes hystérétiques nettement réduites, indiquant une résistance au roulement réduite lorsque ces compositions sont utilisées dans un pneumatique, tout en maintenant des propriétés à froid (plasticité Mooney) et des rigidités satisfaisantes permettant à la fois leur stockage, leur mise en forme, et leur utilisation pour constituer un insert de flanc.

### Exemple 2 - Test de roulage à plat

Les pneumatiques P1 à P5 sont des pneumatiques de structure identique telle que présentée figure 1, comprenant deux inserts de flanc axialement intérieurs à l'armature de carcasse, seule différant la composition des inserts de flancs, comme indiqué dans le tableau 2.

Le test de roulage à plat est effectué conformément au règlement 30 UNECE. La valeur 0 indique que le pneumatique testé a échoué au test de roulage à plat. La valeur 1 indique que le pneumatique testé a passé avec succès le test de roulage à plat.

**Tableau 2**

| **Pneumatique** | **P1** | **P2** | **P3** | **P4** | **P5** |
|---|---|---|---|---|---|
| Composition des inserts de flanc | T1 | I1 | I2 | I3 | I4 |
| Test de roulage à plat | 1 | 1 | 1 | 1 | 1 |

Les résultats du tableau 2 indiquent que tous les pneumatiques testés assurent la performance RME requise (valeur 1 pour le test de roulage à plat).

## Revendications

1. Composition de caoutchouc à base :
- d'une matrice élastomérique comprenant au moins 50 pce d'élastomère butadiénique ;
- d'un système de réticulation ;
- d'au plus 60 pce de charge comprenant :
- de 5 à 30 pce de noir de carbone comprenant majoritairement un noir de carbone, dit noir G, présentant une surface spécifique BET, mesurée selon la norme D6556-10, au plus égale à 40m²/g et un indice d'absorption d'huile d'échantillons comprimés (COAN) mesuré selon la norme ASTM D3493-16 au moins égal à 60 ml/100 g;
- de 2 à 30 pce de charge inorganique
ladite composition ne comprenant pas d'agent de couplage, ou en comprenant moins de 5 % en masse par rapport à la masse de charge inorganique.

2. Composition selon la revendication 1 dans laquelle l'élastomère butadiénique est choisi dans le groupe constitué par les polybutadiènes et leurs mélanges.

3. Composition selon l'une quelconque des revendications précédentes dans laquelle la matrice élastomérique comprend également un élastomère isoprénique, de préférence choisi dans le groupe constitué par les polyisoprènes de synthèse, le caoutchouc naturel, les copolymères d'isoprène et les mélanges de ces élastomères.

4. Composition selon l'une quelconque des revendications précédentes dans laquelle l'élastomère butadiénique est fonctionnalisé.

5. Composition selon la revendication précédente dans laquelle l'élastomère butadiénique fonctionnalisé comprend un groupe fonctionnel comprenant une fonction choisie dans le groupe constitué par les fonctions alcoxysilane, silanol, amine, acide carboxylique, polyéther et leurs combinaisons, préférentiellement constitué par les fonctions alcoxysilane, silanol, amine et leurs combinaisons.

6. Composition selon la revendication précédente dans laquelle l'élastomère butadiénique fonctionnalisé comprend un groupe fonctionnel comprenant au moins une fonction amine.

7. Composition selon l'une quelconque des revendications 4 à 6 dans laquelle l'élastomère butadiénique fonctionnalisé est couplé et/ou étoilé.

8. Composition selon l'une quelconque des revendications précédentes comprenant de 50 à 80 pce, préférentiellement de 50 à 70 pce, d'élastomère butadiénique et de préférence de 20 à 50 pce, préférentiellement de 30 à 50 pce, d'élastomère isoprénique.

9. Composition selon l'une quelconque des revendications précédentes dans laquelle le noir G présente une surface spécifique BET au plus égale à 30m²/g, préférentiellement au plus égale à 25 m²/g.

10. Composition selon l'une quelconque des revendications précédentes ne comprenant pas de noir de carbone dont la surface BET est inférieure à 15 m²/g ou en comprenant moins de 10 pce, de préférence moins de 5 pce, de manière préférée moins de 2 pce, préférentiellement moins de 1 pce.

11. Composition selon l'une quelconque des revendications précédentes dans laquelle la charge inorganique est choisie dans le groupe constitué par la silice, l'alumine, la craie, l'argile, la bentonite, le talc, le kaolin, les microbilles de verre, les paillettes de verre, et leurs mélanges, de préférence constitué par la silice, la craie, l'argile, la bentonite, le talc, le kaolin, et leurs mélanges.

12. Composition selon l'une quelconque des revendications précédentes ne comprenant pas d'agent de couplage, ou en comprenant moins de 2 % en masse, de manière préférée moins de 1% en masse par rapport à la masse de charge inorganique.

13. Article de caoutchouc fini ou semi-fini comportant une composition selon l'une quelconque des revendications 1 à 12.

14. Pneumatique comprenant une composition selon l'une quelconque des revendications 1 à 12.

15. Pneumatique adapté pour un roulage à plat **caractérisé en ce qu'**il comprend un renfort de flanc comprenant une composition selon l'une quelconque des revendications 1 à 12.

## Patentansprüche

1. Kautschukzusammensetzung auf Basis von:
- einer elastomeren Matrix, die mindestens 50 phe Butadien-Elastomer umfasst;
- einem Vernetzungssystem;
- höchstens 60 phe Füllstoff, umfassend:
- 5 bis 30 phe Ruß, der hauptsächlich einen als Ruß G bezeichneten Ruß mit einer gemäß der Norm D6556-10 gemessenen spezifischen BET-Oberfläche von höchstens 40 m²/g und einer gemäß der Norm ASTM D3493-16 gemessenen COAN (Ölabsorptionszahl einer komprimierten Probe) von mindestens 60 ml/100 g umfasst;
- 2 bis 30 phe anorganischem Füllstoff;
wobei die Zusammensetzung kein Kupplungsmittel umfasst oder weniger als 5 Massen-% davon, bezogen auf das Gesamtgewicht an anorganischem Füllstoff, umfasst.

2. Zusammensetzung nach Anspruch 1, wobei das Butadien-Elastomer aus der Gruppe bestehend aus Polybutadienen und Mischungen davon ausgewählt ist.

3. Zusammensetzung nach einem der vorhergehenden Ansprüche, wobei die Elastomermatrix außerdem ein Isopren-Elastomer umfasst, das vorzugsweise aus der Gruppe bestehend aus synthetischen Polyisoprenen, Naturkautschuk, Isopren-Copolymeren und Mischungen dieser Elastomere ausgewählt ist.

4. Zusammensetzung nach einem der vorhergehenden Ansprüche, wobei das Butadien-Elastomer funktionalisiert ist.

5. Zusammensetzung nach dem vorhergehenden Anspruch, wobei das funktionalisierte Butadien-Elastomer eine funktionelle Gruppe mit einer Funktion aus der Gruppe bestehend aus Alkoxysilan-, Silanol-, Amin-, Carbonsäure- und Polyether-Funktionen und Kombinationen davon, vorzugsweise bestehend aus Alkoxysilan-, Silanol- und Amin-Funktionen und Kombinationen davon, umfasst.

6. Zusammensetzung nach dem vorhergehenden Anspruch, wobei das funktionalisierte Butadien-Enantiomer eine funktionelle Gruppe mit mindestens einer Amin-Funktion umfasst.

7. Zusammensetzung nach einem der Ansprüche 4 bis 6, wobei das funktionalisierte Butadien-Elastomer gekoppelt und/oder sternförmig ist.

8. Zusammensetzung nach einem der vorhergehenden Ansprüche, umfassend 50 bis 80 phe, bevorzugt 50 bis 70 phe, Butadien-Elastomer und vorzugsweise 20 bis 50 phe, bevorzugt 30 bis 50 phe, Isopren-Elastomer.

9. Zusammensetzung nach einem der vorhergehenden Ansprüche, wobei der Ruß G eine spezifische BET-Oberfläche von höchstens 30 m²/g, bevorzugt höchstens 25 m²/g, aufweist.

10. Zusammensetzung nach einem der vorhergehenden Ansprüche, die keinen Ruß mit einer BET-Oberfläche von weniger als 15 m²/g umfasst oder weniger als 10 phe, vorzugsweise weniger als 5 phe, vorzugsweise weniger als 2 phe, bevorzugt weniger als 1 phe, davon umfasst.

11. Zusammensetzung nach einem der vorhergehenden Ansprüche, wobei der anorganische Füllstoff aus der Gruppe bestehend aus Kieselsäure, Aluminiumoxid, Kreide, Ton, Bentonit, Talk, Kaolin, Glasmikrokugeln, Glasplättchen und Mischungen davon, vorzugsweise bestehend aus Kieselsäure, Kreide, Ton, Bentonit, Talk, Kaolin und Mischungen davon, ausgewählt ist.

12. Zusammensetzung nach einem der vorhergehenden Ansprüche, die kein Kupplungsmittel umfasst oder weniger als 2 Massen-% davon, vorzugsweise weniger als 1 Massen-%, bezogen auf das Gesamtgewicht an anorganischem Füllstoff, umfasst.

13. Kautschukerzeugnis oder -halbzeug, umfassend eine Zusammensetzung nach einem der Ansprüche 1 bis 12.

14. Reifen, umfassend eine Zusammensetzung nach einem der Ansprüche 1 bis 12.

15. Notlaufreifen, **dadurch gekennzeichnet, dass** er eine Seitenwandverstärkung umfasst, die eine Zusammensetzung nach einem der Ansprüche 1 bis 12 umfasst.

## Claims

1. Rubber composition based:
- on an elastomeric matrix comprising at least 50 phr of butadiene elastomer;
- on a crosslinking system;
- on at most 60 phr of filler comprising:
- from 5 to 30 phr of carbon black predominantly comprising a carbon black, termed black G, having a BET specific surface area, measured according to Standard D6556-10, at most equal to 40 m²/g and an oil absorption number of compressed sample (COAN), measured according to Standard ASTM D3493-16, at least equal to 60 ml/100 g;
- from 2 to 30 phr of inorganic filler,
said composition not comprising a coupling agent, or comprising less than 5% by weight thereof relative to the weight of inorganic filler.

2. Composition according to Claim 1, in which the butadiene elastomer is selected from the group consisting of polybutadienes and mixtures thereof.

3. Composition according to either one of the preceding claims, in which the elastomeric matrix also comprises an isoprene elastomer, preferably selected from the group consisting of synthetic polyisoprenes, natural rubber, isoprene copolymers and mixtures of these elastomers.

4. Composition according to any one of the preceding claims, in which the butadiene elastomer is functionalized.

5. Composition according to the preceding claim, in which the functionalized butadiene elastomer comprises a functional group comprising a function selected from the group consisting of alkoxysilane, silanol, amine, carboxylic acid and polyether functions, and combinations thereof, preferably consisting of alkoxysilane, silanol and amine functions, and combinations thereof.

6. Composition according to the preceding claim, in which the functionalized butadiene elastomer comprises a functional group comprising at least one amine function.

7. Composition according to any one of Claims 4 to 6, in which the functionalized butadiene elastomer is coupled and/or star-shaped.

8. Composition according to any one of the preceding claims, comprising from 50 to 80 phr, preferentially from 50 to 70 phr, of butadiene elastomer and preferably from 20 to 50 phr, preferentially from 30 to 50 phr, of isoprene elastomer.

9. Composition according to any one of the preceding claims, in which the black G has a BET specific surface area at most equal to 30 m²/g, preferentially at most equal to 25 m²/g.

10. Composition according to any one of the preceding claims, not comprising carbon black of which the BET surface area is less than 15 m²/g or comprising less than 10 phr, preferably less than 5 phr, preferably less than 2 phr, preferentially less than 1 phr, thereof.

11. Composition according to any one of the preceding claims, in which the inorganic filler is selected from the group consisting of silica, alumina, chalk, clay, bentonite, talc, kaolin, glass microbeads, glass flakes, and mixtures thereof, preferably consisting of silica, chalk, clay, bentonite, talc, kaolin, and mixtures thereof.

12. Composition according to any one of the preceding claims, not comprising a coupling agent, or comprising less than 2% by weight, preferably less than 1% by weight, thereof relative to the weight of inorganic filler.

13. Finished or semi-finished rubber item comprising a composition according to any one of Claims 1 to 12.

14. Tyre comprising a composition according to any one of Claims 1 to 12.

15. Flat-run tyre, **characterized in that** it comprises a sidewall reinforcer comprising a composition according to any one of Claims 1 to 12.
